# EUROPÄISCHE PATENTSCHRIFT

(11) **EP 0 851 821 B1**
(45) Veröffentlichungstag und Bekanntmachung des Hinweises auf die Patenterteilung: **13.10.1999**
(21) Anmeldenummer: 96922758.6
(22) Anmeldetag: 09.07.1996
(51) Int. Cl.: B60T 8/36, F16K 27/00, F15B 13/00, F16J 15/02

(54) **HYDRAULIKAGGREGAT**
HYDRAULIC ASSEMBLY
ENSEMBLE HYDRAULIQUE

(30) Priorität: 22.09.1995 DE 19535235
(43) Veröffentlichungstag der Anmeldung: 08.07.1998
(73) Patentinhaber: ROBERT BOSCH GMBH, 70442 Stuttgart (DE)
(72) Erfinder: MÜLLER, Klaus, D-71732 Tamm (DE); SCHURR, Volker, D-71701 Schwieberdingen (DE)
(86) Internationale Anmeldenummer: DE9601237
(87) Internationale Veröffentlichungsnummer: WO9710979

(56) Entgegenhaltungen:
- EP-A- 0 539 770
- EP-A- 0 675 030
- DE-A- 3 701 019
- DE-A- 3 729 549
- DE-A- 3 742 830
- DE-A- 3 810 788
- DE-A- 4 133 641

## Beschreibung

### Stand der Technik

Die Erfindung geht aus von einem Hydraulikaggregat nach der Gattung des Anspruchs 1. Derartige Hydraulikaggregate finden Verwendung in Fahrzeugbremsanlagen, die insbesondere über eine Blockierschutz- oder eine Antriebsschlupfregeleinrichtung verfügen. In einen Hydraulikblock des Hydraulikaggregats sind Magnetventile eingebaut, die im Hydraulikblock hydraulisch mit der Bremsanlage verschaltet sind und deren magnetischer Betätigungsteil auf einer Seite aus dem Hydraulikblock vorsteht. Auf den Betätigungsteil ist eine Spule zur Ventilbetätigung aufgesteckt. Der Betätigungsteil der Magnetventile befindet sich unter einer Abdeckhaube, die die Spulen auf den Betätigungsteilen hält. Zum Schutz gegen Eindringen von Schmutz oder Wasser kann eine Dichtung zwischen einen Rand der Abdeckhaube und den Hyraulikblock eingelegt sein.

Ein aus der DE 41 33 641 A1 bekanntes Hydraulikaggregat weist einen elastischen Formkörper auf, der in die Abdeckhaube eingelegt oder eingegossen ist und der die Spulen der Magnetventile aufnimmt. Der elastische Formkörper weist eine umlaufende Dichtlippe an der Innenseite des dem Hydraulikblock zugewandten Randes der Abdeckhaube auf, die am Hydraulikblock anliegt.

Nachteil der bekannten Hydraulikaggregate ist, daß sie nicht immer zuverlässig und während der gesamten Lebensdauer abdichten. Unterwanderung der Abdichtung zwischen dem Außenumfang der Abdeckhaube und dem Hydraulikblock durch Korrosion kann zum Eindringen von Feuchtigkeit unter die Abdeckhaube führen. Desweiteren können Relativbewegungen zwischen Abdeckhaube und Hydraulikblock aufgrund der extremen, in einem Motorraum eines Kraftfahrzeugs auftretenden Temperaturen, die von -40°C bis +120°C reichen können, Undichtigkeiten zur Folge haben.

### Vorteile der Erfindung

Beim erfindungsgemäßen Hydraulikaggregat mit den Merkmalen des Anspruchs 1 ist die Abdichtung durch die zusätzliche Einzelabdichtung der Magnetventile wesentlich verbessert. Weiterer Vorteil ist, daß das Dichtelement die Spulen gegen die Abdeckhaube drückt und sie dadurch in ihrer Lage auf dem Betätigungsteil der Magnetventile fixiert. Ein ansonsten erforderliches Fixierelement, beispielsweise ein Federblech, entfällt. Darüber hinaus läßt sich das Dichtelement einfach am Hydraulikaggregat anbringen, wobei es durch Aufstecken auf die Betätigungsteile der Magnetventile positioniert wird. Gegenüber einem elastischen Formkörper, wie er in der genannten DE 41 33 641 A1 offenbart ist, hat das erfindungsgemäße Hydraulikaggregat den Vorteil, daß sein Dichtelement einfacher geformt und damit einfacher herstellbar ist, und daß es wesentlich weniger Werkstoff benötigt.

Die Unteransprüche haben vorteilhafte Ausgestaltungen und Weiterbildungen der im Hauptanspruch angegebenen Erfindung zum Gegenstand.

### Zeichnungen

Die Erfindung wird nachfolgend anhand eines in den Zeichnungen dargestellten Ausführungsbeispiels näher erläutert. Es zeigen:
- Figur 1: einen Schnitt durch ein erfindungsgemäßes Hydraulikaggregat;
- Figur 2: eine Ansicht eines Dichtelements aus Figur 1 in anderem Maßstab; und
- Figur 3: einen vergrößerten Teilschnitt entlang Linie III-III in Figur 2 in größerem Maßstab.

### Beschreibung des Ausführungsbeispiels

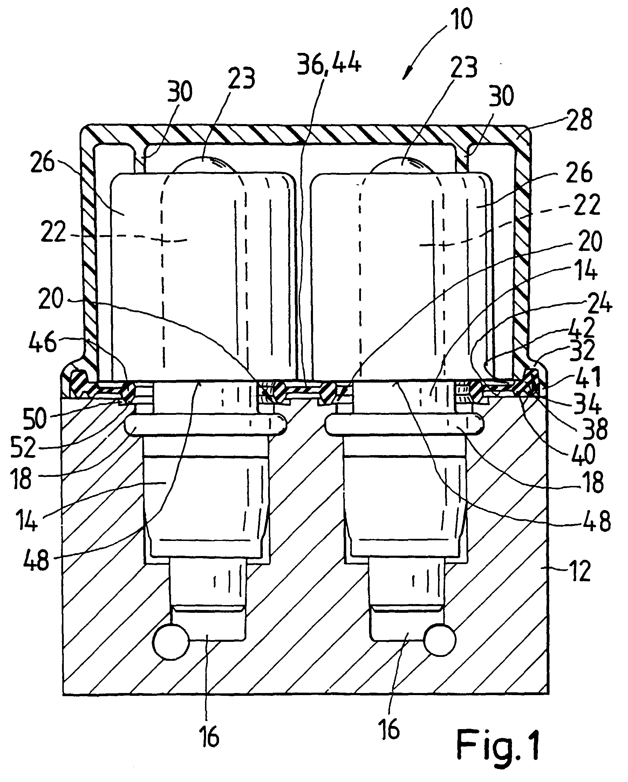

Das in Figur 1 dargestellte, erfindungemäße Hydraulikaggregat 10 weist einen Hydraulikblock 12 auf, in dem insgesamt acht Magnetventile 14 in zwei Reihen nebeneinander angebracht sind. Die Magnetventile 14 sind in Stufenbohrungen 16 des Hydraulikblocks 12 eingesetzt. Sie weisen einen Flansch 18 auf, an dem sie durch Verstemmen 20 von Werkstoff des Hydraulikblocks 12 gehalten sind.

Ein Betätigungsteil 22 der Magnetventile 14 steht mit einem Ventildom 23 auf einer Seite 24 aus dem Hydraulikblock 12 vor. Auf den Betätigungsteil 22 ist eine hohlzylindrische Spule 26 zur magnetischen Ventilbetätigung aufgesteckt.

Eine Abdeckhaube 28 ist auf der Seite 24 des Hydraulikblocks 12 angebracht, an der der Betätigungsteil 22 der Magnetventile 14 vorsteht. Die Abdeckhaube 28 ist ein Kunststoff-Spritzgußteil, das die Magnetventile 14 abdeckt. Mit der Abdeckhaube 28 einstückige Haltestege 30 auf deren Innenseite drücken in axialer Richtung gegen die Spulen 26 und halten diese auf den den Betätigungsteil 22 der Magnetventile 14 enthaltenden Ventildom 23. Die Abdeckhaube 28 ist mit in der Zeichnung nicht sichtbaren Schrauben am Hydraulikblock 12 angeschraubt.

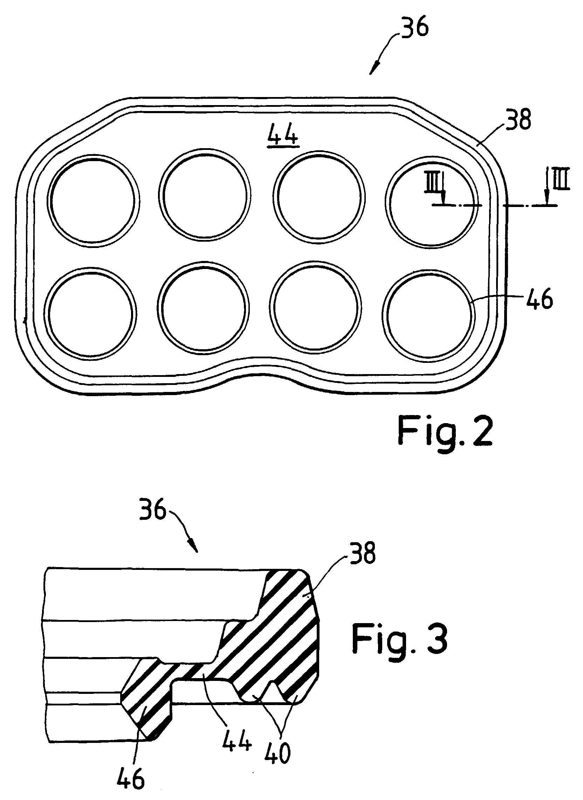

Ein dem Hydraulikblock 12 zugewandter Rand der Abdeckhaube 28 verbreitert sich zu einem umlaufenden Fuß 32, der mit einer zum Hydraulikblock 12 hin offenen Nut 34 versehen ist. In diese Nut 34 greift ein im wesentlichen plattenförmiges Dichtelement 36 mit einem wulstförmigen, einen äußeren Dichtkörper 38 bildenden Rand ein (vgl. Figuren 2 und 3). Der äußere Dichtkörper 38 weist zwei, in Richtung des Hydraulikblocks 12 abstehende Dichtlippen 40 auf. Der zwischen den Rand 32 der Abdeckhaube 28 und den Hydraulikblock 12 eingelegte Dichtkörper 38 des Dichtelements 36 dichtet einen Innenraum der Abdeckhaube 28, in dem sich der magnetische Betätigungsteil 22, 26 der Magnetventile 14 befindet, hermetisch ab.

Außerhalb des äußeren Dichtkörpers 38 reicht der Fuß 32 der Abdeckhaube 28 bis an den Hydraulikblock 12. Dieser am Hydraulikblock 12 anliegende Teil des Fußes 32 bildet einen Abstandshalter 41, der einen Spalt 42 für den Dichtkörper 38 zwischen dem Fuß 32 der Abdeckhaube 28 und dem Hydraulikblock 12 und damit die Pressung des Dichtkörpers 38 des Dichtelements 36 unabhängig von der Anzugskraft der die Abdeckhaube 28 haltenden Schrauben festlegt.

Das Dichtelement 36 weist für jedes Magnetventil 14 einen inneren, wulstartigen Dichtkörper 46 auf, der mittels einer Membran 44 einstückig mit dem äußeren Dichtkörper 38 verbunden ist. Der innere Dichtkörper 44 befindet sich zwischen einer dem Hydraulikblock 12 zugewandten Stirnfläche 48 der Spule 26 und dem Hydraulikblock 12, er umschließt das Magnetventil 14. Der innere Dichtkörper 46 ist ein eine umlaufende Stufe 50 an einer Mündung der die Magnetventile 14 aufnehmenden Stufenbohrungen 16 des Hydraulikblocks 12 eingelegt. Auf diese Weise ist das Dichtelement 36 bei der Montage am Hydraulikblock 12 positioniert. Der innere Dichtkörper 46 weist eine in Richtig des Hydraulikblocks 12 abstehende Dichtlippe 52 auf, die am Grund der Stufe 50 anliegt. Ebenso kann der äußere Dichtkörper 38 in einer Vertiefung des Hydraulikblocks 12 liegen (nicht dargestellt).

Neben seiner Dichtfunktion wirkt der innere Dichtkörper 46 als Federelement, das die Spule 26 der Magnetventile 14 in axialer Richtung gegen den Haltesteg 30 der Abdeckhaube 28 drückt. Auf diese Weise ist die Spule 26 in axialer Richtung auf dem Ventildom 23 fixiert. Der Abstandshalter 41 der Abdeckhaube 28 legt die axiale Position der Spule 26 exakt fest.

Das Dichtelement 36 ist beständig gegen alle in einem Motorraum eines Kraftfahrzeugs üblicherweise vorkommenden Medien wie Öle, Kraftstoff und insbesondere gegen Bremsflüssigkeit. Das Dichtelement 36 besteht vorzugsweise aus EPDM (Ethylen-Propylen, Dien-Kautschuk). Es hält Umgebungstemperaturen von -40°C bis +120°C Stand und bleibt bei den genannten tiefen Temperaturen elastisch.

## Patentansprüche

1. Hydraulisches Aggregat (10) mit einem Hydraulikblock (12), in den Magnetventile (14) eingebaut sind, auf deren magnetische Betätigungsteile (22), die an einer Seite des Hydraulikblocks (12) aus diesem vorstehen, je eine Spule (26) aufgesteckt ist, mit einer Abdeckhaube (28), die am Hydraulikblock (12) angebracht ist, die die Betätigungsteile (22) der Magnetventile (14) abdeckt und die die Spulen (26) auf den Betätigungsteilen (22) der Magnetventile (14) hält, und mit einem zusammendrückbaren, über den ganzen Umfang der Abdeckhaube (28) reichenden Dichtelement (36), das zwischen einem dem Hydraulikblock (12) zugewandten Rand (32) der Abdeckhaube (28) und dem Hydraulikblock (12) einliegt, dadurch gekennzeichnet, daß das Dichtelement (36) ebenfalls zwischen den Spulen (26) der Magnetventile (14) und dem Hydraulikblock (12) einliegt und der Kontur der Magnetventile (14) entspricht sowie eine zwischen dem Rand der Abdeckhaube (28) und der Kontur der Magnetventile (14) verlaufende Membran (44) aufweist.

2. Hydraulisches Aggregat nach Anspruch 1, dadurch gekennzeichnet, daß das Dichtelement (36) einen äußeren, umlaufenden, wulstartigen Dichtkörper (38) aufweist, der zwischen dem Rand (32) der Abdeckhaube (28) und dem Hydraulikblock (12) einliegt.

3. Hydraulisches Aggregat nach Anspruch 2, dadurch gekennzeichnet, daß der äußere Dichtkörper (38) mindestens zwei Dichtlippen (40) aufweist.

4. Hydraulisches Aggregat nach Anspruch 1 oder 2, dadurch gekennzeichnet, daß das Dichtelement (36) innere, wulstartige Dichtkörper (46) aufweist, die zwischen den Spulen (26) und dem Hydraulikblock (12) einliegen und je ein Magnetventil (14) umschließen.

5. Hydraulisches Aggregat nach Anspruch 1, dadurch gekennzeichnet, daß das Dichtelement (36) aus Ethylen-Propylen-Dien-Kautschuk besteht.

6. Hydraulisches Aggregat nach Anspruch 2, dadurch gekennzeichnet, daß die Abdeckhaube (28) Abstandshalter (41) aufweist, über die sie sich am Hydraulikblock (12) abstützt.

7. Hydraulisches Aggregat nach Anspruch 2 oder 4, dadurch gekennzeichnet, daß der Hydraulikblock (12) eine oder mehrere Vertiefungen (50) aufweist, in der der äußere Dichtkörper (38) und/oder innere Dichtkörper (46) einliegen.

8. Hydraulisches Aggregat nach Anspruch 2 und 4, dadurch gekennzeichnet, daß die inneren Dichtkörper (46) und der äußere Dichtkörper (38) durch die Membran (44) des Dichtelements (36) verbunden sind.

## Claims

1. Hydraulic assembly (10) with a hydraulic block (12), into which are built solenoid valves (14) onto the magnetic actuating parts (22) of which a coil (26) is slipped in each case, the said actuating parts projecting from the hydraulic block (12) on one side of the latter, with a covering cap (28) which is mounted on the hydraulic block (12) and covers the actuating parts (22) of the solenoid valves (14) and which holds the coils (26) on the actuating parts (22) of the solenoid valves (14), and with a compressible sealing element (36) which extends over the entire circumference of the covering cap (28) and which is seated between an edge (32) of the covering cap (28), the said edge facing the hydraulic block (12), and the hydraulic block (12), characterized in that the sealing element (36) is likewise seated between the coils (26) of the solenoid valves (14) and the hydraulic block (12), corresponds to the contour of the solenoid valves (14) and has a diaphragm (44) running between the edge of the covering cap (28) and the contour of the solenoid valves (14).

2. Hydraulic assembly according to Claim 1, characterized in that the sealing element (36) has an outer peripheral, bead-like sealing body (38) which is seated between the edge (32) of the covering cap (28) and the hydraulic block (12).

3. Hydraulic assembly according to Claim 2, characterized in that the outer sealing body (38) has at least two sealing lips (40).

4. Hydraulic assembly according to Claim 1 or 2, characterized in that the sealing element (36) has inner, bead-like sealing bodies (46) which are seated between the coils (26) of the hydraulic block (12) and which in each case surround a solenoid valve (14).

5. Hydraulic assembly according to Claim 1, characterized in that the sealing element (36) consists of ethylene/propylene/diene rubber.

6. Hydraulic assembly according to Claim 2, characterized in that the covering cap (28) has spacers (41), via which it is supported on the hydraulic block (12).

7. Hydraulic assembly according to Claim 2 or 4, characterized in that the hydraulic block (12) has one or more depressions (50), in which the outer sealing body (38) and/or the inner sealing bodies (46) are seated.

8. Hydraulic assembly according to Claims 2 and 4, characterized in that the inner sealing bodies (46) and the outer sealing body (38) are connected by means of the diaphragm (44) of the sealing element (36).

## Revendications

1. Ensemble hydraulique (10) avec un bloc hydraulique (12), dans lequel sont montés des électrovannes (14), sur les pièces magnétiques d'actionnement (22) desquelles qui font saillie sur un côté du bloc hydraulique (12) à partir de celui-ci, est respectivement enfilé une bobine (26), avec un capot de recouvrement (28) qui est mis sur le bloc hydraulique (12) qui recouvre les pièces d'actionnement (22) des électrovannes (14) et qui maintient les bobines (26) sur les pièces d'actionnement (22) des électrovannes (14), et avec un élément d'étanchéité (36) compressible qui s'étend sur tout le pourtour du capot de recouvrement (28), et qui est inséré entre un bord (32) du capot de recouvrement (28) tourné vers le bloc hydraulique (12),
caractérisé en ce que
l'élément d'étanchéité (36) est également inséré entre les bobines (26) des électrovannes (14) et le bloc hydraulique (12) et correspond au contour des électrovannes (14) et présente une membrane (44) qui s'étend entre le bord du capot de recouvrement (28) et le contour des électrovannes (14).

2. Ensemble hydraulique selon la revendication 1,
caractérisé en ce que
l'élément d'étanchéité (36) présente un corps d'étanchéité extérieur (38) qui fait tout le tour, en forme de bourrelet qui est inséré entre le bord (32) du capot de recouvrement (28) et le bloc hydraulique (12).

3. Ensemble hydraulique selon la revendication 2,
caractérisé en ce que
le corps d'étanchéité extérieur (38) présente au moins deux lèvres d'étanchéité (40).

4. Ensemble hydraulique selon la revendication 1 ou 2,
caractérisé en ce que
l'élément d'étanchéité (36) présente des corps d'étanchéité (46) intérieurs, en forme de bourrelets qui sont insérés entre les bobines (26) et le bloc hydraulique (12) et entourent chacun une électrovanne (14).

5. Ensemble hydraulique selon la revendication 1,
caractérisé en ce que
l'élément d'étanchéité (36) est réalisé en éthylène, propylène, diène, caoutchouc (EPDM).

6. Ensemble hydraulique selon la revendication 2,
caractérisé en ce que
le capot de recouvrement (28) présente un écarteur (41), au moyen duquel il prend appui sur le bloc hydraulique (12).

7. Ensemble hydraulique selon la revendication 2 ou 4,
caractérisé en ce que
le bloc hydraulique (12) présente un ou plusieurs renfoncements (50), dans lesquels sont insérés le corps extérieur d'étanchéité (38) et/ou le corps intérieur d'étanchéité (46).

8. Ensemble hydraulique selon la revendication 2 ou 4,
caractérisé en ce que
le corps intérieur d'étanchéité (46) et le corps extérieur d'étanchéité (38) sont reliés par la membrane (44) de l'élément d'étanchéité (36)
